# EUROPÄISCHE PATENTANMELDUNG

(11) **EP 0 954 971 A2**
(43) Veröffentlichungstag der Anmeldung: **10.11.1999**
(21) Anmeldenummer: 99107233.1
(22) Anmeldetag: 14.04.1999
(51) Int. Cl.: A21B 3/04, A21B 1/26

(54) **Entschwadung für einen Backofen**

(30) Priorität: 06.05.1998 DE 19820067
(71) Anmelder: Werner & Pfleiderer Lebensmitteltechnik GmbH, 91550 Dinkelsbühl (DE)
(72) Erfinder: Dollinger, Rainer, 91550 Dinkelsbühl (DE); Hafner, Josef, 91626 Schopfloch (DE); Knost, Claudia, 91550 Dinkelsbühl (DE)
(74) Vertreter: Rau, Albrecht

(57) **Zusammenfassung**

Ein Backofen (1) weist mindestens einen Herd (3) mit einem Backraum (4), eine Heizeinrichtung, eine Beschwadungseinrichtung zum Zuführen von Schwaden und/oder Frischluft, eine Entschwadungseinrichtung zum Abführen von Schwaden und/oder Abluft und eine Überdruck-Abbau-Einrichtung zum Abbau von Überdrücken im Backraum (4) auf. Die Entschwadungseinrichtung und die Überdruck-Abbau-Einrichtung sind über eine gemeinsame Abführleitung (46) mit jedem Herd (3) verbunden.

## Beschreibung

Die Erfindung betrifft einen Backofen gemäß dem Oberbegriff des Anspruchs 1.

Bei Backöfen ist es bekannt, den für den Backprozeß erforderlichen Dampf nach einer rezepturabhängigen Einwirkzeit spontan abziehen zu lassen. Den Vorgang der Einbringung von Dampf in den Backraum bezeichnet man dabei als Beschwadung, den der Abführung von Dampf als Entschwadung. Beim Beschwaden des Backraums entstehen bei den meisten Dampferzeugungssystemen Druckstöße im Bereich von 400 bis 500 Pa, die zu unkontrolliertem Dampfaustritt aus dem Backraum, meist durch die Beschickungsklappe, führen. Dies führt vor allem bei großen Mehretagenbacköfen zu einer nicht unbeträchtlichen Gefährdung des Betriebspersonais. Bei bekannten Systemen wird die gesteuerte Entschwadung in fast allen Fällen über einen Schieber realisiert, der zum Entschwaden geöffnet wird, so daß heißer Wasserdampf austreten und Frischluft in den Backraum eintreten kann. Der Abbau des Überdrucks wird, sofern er nicht unkontrolliert durch die Beschickungsklappe erfolgt, durch eine separate Ventilklappenanordnung mit eigenen Abführkanälen bewerkstelligt. Der Nachteil der bekannten Druckabbaumechanismen besteht darin, daß sie entweder das Betriebspersonal gefährden oder durch die für jeden einzelnen Backraum erforderlichen Abführleitungen konstruktiv aufwendig und kostspielig sind.

Der Erfindung liegt die Aufgabe zugrunde, einen gattungsgemäßen Backofen derart weiterzubilden, daß die Entschwadung und der Abbau von Überdruck im Backraum in möglichst einfacher Weise bewerkstelligt werden kann.

Diese Aufgabe wird durch den kennzeichnenden Teil des Anspruchs 1 gelöst. Der Kern der Erfindung besteht darin, die Entschwadungs-Einrichtung und die Überdruck-Abbau-Einrichtung über lediglich eine Abführleitung mit dem Backraum zu verbinden. Der Vorteil der Erfindung gemäß Anspruch 2 besteht darin, daß das zur Regelung der Entschwadung erforderliche Absperr-Element und das zum Abbau von Überdrücken erforderliche Verschluß-Element in eine Einheit integriert werden.

Das Vorsehen verschwenkbarer Klappen gemäß Anspruch 5 hat den Vorteil, daß diese sich unter Wirkung eines Überdruck-Gasstromes öffnen und nach Abbau desselben in Folge der Schwerkraft wieder schließen. Ein externer Antrieb ist somit nicht erforderlich. Der Druck, oberhalb dessen sich die Klappen öffnen, kann durch Anbringung verschieden schwerer Gewichte an den Klappen verändert werden, wie dies in Anspruch 6 vorgesehen ist.

Zusätzliche Vorteile ergeben sich aus den anderen Unteransprüchen.

Weitere Merkmale, Einzelheiten und Vorteile der Erfindung ergeben sich aus der nachfolgenden Beschreibung eines Ausführungsbeispiels anhand der Zeichnung. Es zeigt
- Fig. 1: eine Querschnitts-Darstellung eines Mehretagenbackofens,
- Fig. 2: eine Querschnitts-Darstellung des Absperr-Elements gemäß Figur 1 und
- Fig. 3: eine Draufsicht auf das Absperr-Element gemäß Figur 2.

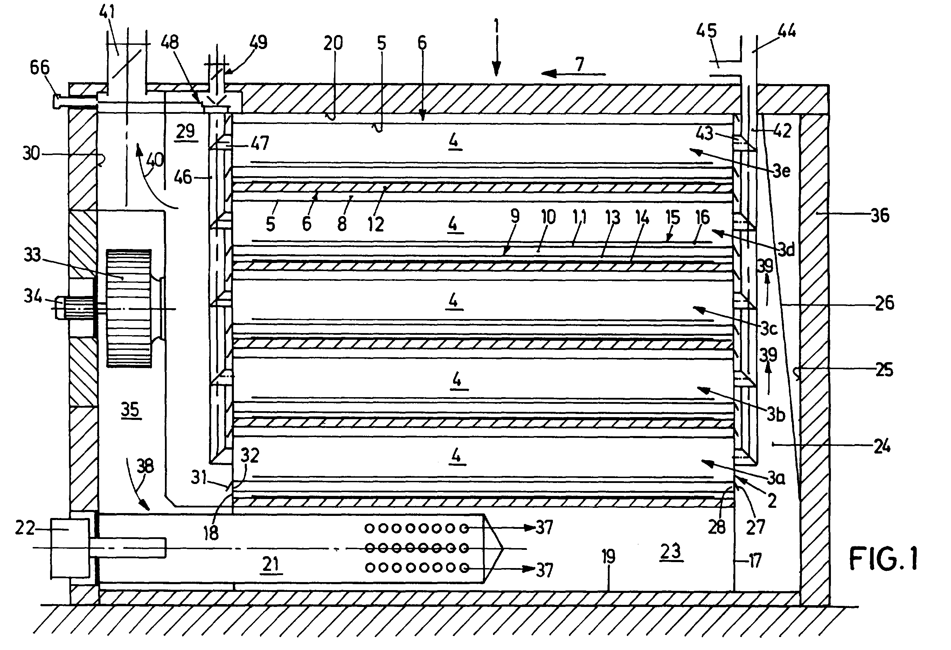

Der in Figur 1 dargestellte Backofen 1 ist ein sogenannter Mehretagen-Durchlaufofen, in dem ein Herdkörper 2 vorgesehen ist, in dem fünf Herde 3a, 3b, 3c, 3d und 3e etagenartig übereinander angeordnet sind. Jeder Herd weist einen Backraum 4 auf, der an seiner Oberseite durch eine im wesentlichen nur durch Wärmestrahlung heizende obere, durch ein dünnes Blech gebildete Heizfläche 5 begrenzt ist. Diese Heizfläche 5 ist Teil eines Oberhitze-Heizregisters 6, das horizontal und entlang der Querrichtung 7 des Backofens 1 verlaufende Heizgaskanäle 8 aufweist. Jeder Backraum 4 weist an seiner Unterseite ein im Prinzip gleichartig mit den Oberhitze-Heizregistern 6 aufgebautes Unterhitze-Heizregister 9 auf, das ebenfalls horizontal und entlang der Querrichtung 7 verlaufende Heizgaskanäle 10 aufweist und durch eine untere Heizfläche 11 zum Backraum 4 begrenzt wird. Auch diese Heizfläche 11 wird durch ein dünnes Blech gebildet.

Unterhalb jedes Unterhitze-Heizregisters 9 und im Abstand zu diesem, d.h. oberhalb des Oberhitze-Heizregisters 6 des nächst unteren Herdes 3b bis 3e, ist eine Zwischenisolierung 12 angebracht, um die einzelnen Herde 3a bis 3e thermisch möglichst voneinander zu trennen. Zwischen einem Unterhitze-Heizregister 9 und der darunter liegenden Zwischenisolierung 12 ist ein Rückführkanal 13 für das Untertrum 14 eines Backbandes 15 vorgesehen, dessen Obertrum 16 oberhalb der unteren Heizfläche 11 des Unterhitze-Heizregisters 9 eines Herdes 3a bis 3e durch dessen Backraum 4 geführt wird. Die Herde 3a bis 3e werden durch jeweils eine vertikale Seitenwand 17 und eine Seitenwand 18 begrenzt, die im Herdkörper 2 senkrecht zur in Figur 1 gezeigten Schnittebene verlaufen und am Boden 19 und der Decke 20 des Herdkörpers 2 abgestützt bzw. befestigt sind.

Unterhalb des untersten Herdes 3a ist eine im wesentlichen zylindrische Brennkammer 21 angeordnet, in die ein Brenner 22 einmündet. Der Brennkammer 21 ist ein Heizgas-Mischraum 23 nachgeordnet, der wiederum in das unterste Ende eines Heizgas-Zuführkanals 24 einmündet, der zwischen der einen Seitenwand 17 der Herde 3a bis 3e und der benachbarten Außenwand 25 des Herdkörpers 2 ausgebildet ist. Der Heizgas-Zuführkanal 24 wird außer durch die Seitenwand 17 durch eine zur Seitenwand 17 nach oben hin geneigte Begrenzungswand 26 begrenzt, so daß der Heizgas-Zuführkanal 24 einen nach oben abnehmenden Querschnitt aufweist. Die Heizgaskanäle 8 und 10 der Heizregister 6 und 9 sind an den Heizgas-Zuführkanal 24 angeschlossen, wobei jeweils Regelklappen 27 vorgesehen sind, mittels derer die Größe der Eintrittsöffnung 28 jedes Heizregisters 6 bzw. 9 veränderbar ist.

Die Heizgaskanäle 8 und 10 aller Herde 3a bis 3e münden in einen Heizgas-Sammelraum 29, der zwischen der Seitenwand 18 und einer zugeordneten Außenwand 30 des Herdkörpers 2 angeordnet ist. Alternativ oder kumulativ zu den Regelklappen 27 in der jeweiligen Eintrittsöffnung 28 der Heizgaskanäle 8 bzw. 10 können auch gleichartig ausgebildete Regelklappen 31 in den Austrittsöffnungen 32 der Heizgaskanäle 8 bzw. 10 in den Heizgas-Sammelraum 29 vorgesehen sein. Der Heizgas-Sammelraum 29 mündet in ein Heizgas-Gebläse 33, das mittels eines Motors 34 angetrieben wird. Dieses Gebläse 33 mündet wiederum in einen Heizgas-Rückführkanal 35, dem die Brennkammer 21 nachgeordnet ist. Die Decke 20, der Boden 19 und die Außenwände 25, 30 des Herdkörpers 2 sind mittels einer Isolation 36 thermisch isoliert.

Die durch die Verbrennung im Brenner 22 entstehenden heißen Rauchgase strömen entsprechend den Strömungsrichtungspfeilen 37 aus der Brennkammer 21 in den Heizgas-Mischraum 23. Dort werden sie mit entsprechend den Strömungsrichtungspfeilen 38 zugeführten abgekühlten Heizgasen gemischt, wodurch Heizgas mit einer entsprechenden Mischtemperatur erzeugt wird. Dieses Heizgas wird entsprechend den Strömungsrichtungspfeilen 39 durch den Heizgas-Zuführkanal 24 und die Eintrittsöffnungen 28 den Heizregistern 6 bzw. 9 zugeführt. Durch den Sog des Heizgas-Gebläses 33 wird es durch die Heizregister 6 bzw. 9 gesaugt und verläßt diese durch die Austrittsöffnungen 32. Es durchströmt den Heizgas-Sammelraum 29 und wird dann mittels des Heizgas-Gebläses 33 in den Heizgas-Rückführkanal 35 gedrückt, von wo aus es - wie bereits erläutert - zur Brennkammer 21 gelangt. In dem Maße, in dem Heizgas vom Brenner 22 dem Heizgas-Mischraum 23 neu zugeführt wird, werden abgekühlte Heizgase entsprechend dem Strömungsrichtungspfeil 40 durch einen Kamin 41 abgeführt. Die Heizgase durchströmen die Heizregister 6 bzw. 9 geradlinig entlang der Querrichtung 7. Sie können auch zum Zwecke besserer Wärmeübertragung durch in den Heizregistern 6 bzw. 9 angeordnete Formelemente verwirbelt oder umgelenkt werden.

Im Bereich des Heizgas-Zuführkanals 24 ist pro Herd 3a bis 3e eine vertikal verlaufende und nach oben herausgeführte Zuführleitung 42 angeordnet, die mit einer Stichleitung 43 durch die Seitenwand 17 hindurch in den Backraum 4 jedes Herdes 3a bis 3e eintritt. Die Zuführleitung 42 ist an ihrem äußeren Ende mit einer Dampf-Zuführleitung 44 und einer Frischluft-Zuführleitung 45 verbunden. Durch die Zuführleitung 42 kann jedem Herd gesondert entweder Schwaden, d.h. Wasserdampf, zum Beschwaden des Backguts oder Frischluft zum Entschwaden zugeführt werden. Im Bereich des Heizgas-Sammelraums 29 sind den Zuführleitungen 42 entsprechende Abführleitungen 46 angeordnet, die jeweils mittels einer Stichleitung 47 durch die Seitenwand 18 jeweils mit dem Backraum 4 je eines Herdes 3a bis 3e verbunden sind. Die Abführleitungen 46 sind über Absperr-Elemente 48 mit einem nach außen führenden Entschwadungskamin 49 verbunden, durch den Schwaden und Abluft nach außen abgeführt werden können.

Auf der Beladeseite des Backofens 1, die sich entgegen der Blickrichtung in Figur 1 befindet, ist ein übliches Kopf-Element vorgesehen, in dem die Umlenkung der endlosen Backbänder 15 erfolgt. Auf der in Figur 1 in Blickrichtung liegenden Entladeseite ist ein Abschluß-Element angeordnet, in dem die Backbänder 15 angetrieben und umgelenkt werden. Die Transportrichtung des Backbandes 15 ist senkrecht zur Schnittebene von Figur 1 in Blickrichtung des Betrachters. Es ist möglich, zwischen dem Kopf-Element und dem Abschluß-Element mehrere Backöfen 1 modulartig und fluchtend hintereinander anzuordnen, wobei sich jedes Backband 15 in diesem Fall durch die fluchtend hintereinander angeordneten Backräume 4 der insoweit einander jeweils zugeordneten Herde 3a, 3b, 3c, 3d bzw. 3e erstreckt. Am Kopf-Element und Abschluß-Element sind Klappen vorgesehen, die die Backräume 4 im geschlossenen Zustand nach vorne und nach hinten begrenzen und durch die im geöffneten Zustand Teiglinge zugeführt bzw. fertiges Backgut entnommen werden. Die Beladung auf der Beladeseite durch das Kopf-Element mit Backgut und die Entladung auf der Entladeseite durch das Abschluß-Element erfolgen in der wie bei Mehretagen-Durchlauföfen üblichen und bekannten Weise.

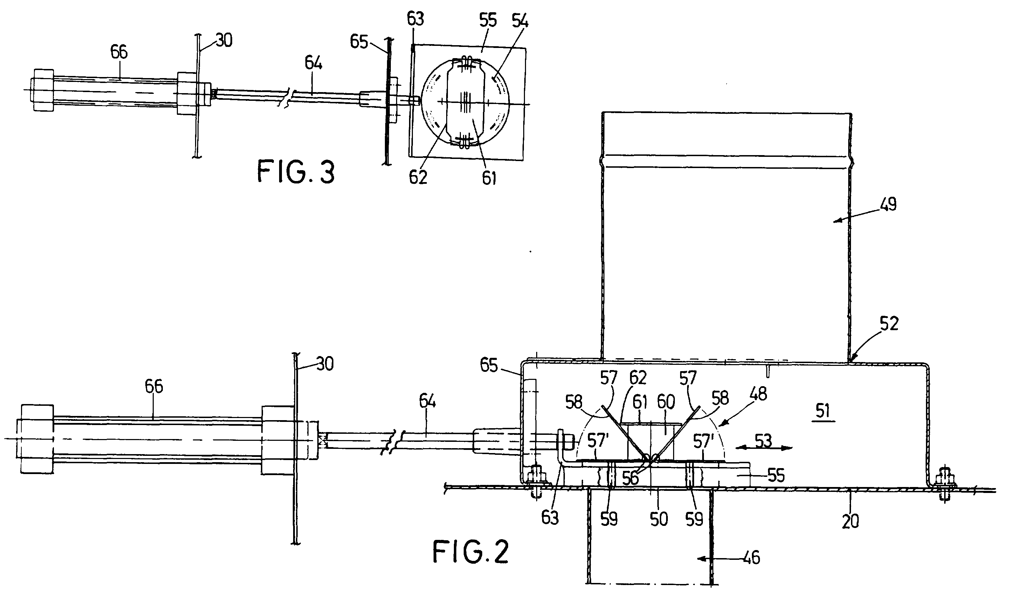

Im folgenden wird das Absperr-Element 48 genauer beschrieben. Die Abführleitungen 46 münden in entsprechend geformte Öffnungen 50 in der Decke 20 und sind mit dieser dicht verbunden. Auf der der Abführleitung 46 abgewandten Seite der Decke 20 ist ein Kaminraum 51 vorgesehen, der durch ein nach oben offenes Kamingehäuse 52 begrenzt wird. Das als Absperrschieber ausgebildete Absperr-Element 48 ist auf der der Abführleitung 46 abgewandten, also oberen Seite der Decke 20 entlang der Verschieberichtung 53 verschiebbar, so daß ein vorgegebener Bruchteil der Öffnung 50 versperrt wird. Das Absperr-Element 48 weist eine mit einer lochartigen Ausnehmung 54 versehene, als Schieberplatte ausgebildete Grundplatte 55 auf, wobei die äußeren Abmessungen der Grundplatte 55 derart gewählt sind, daß die Grundplatte 55 die Öffnung 50 bedecken kann. Die Größe der Ausnehmung 54 kann in Abhängigkeit von der Größe der Öffnung 50 und den herrschenden Druckverhältnissen gewählt werden. In der Regel werden die Öffnung 50 und die Ausnehmung 54 hinsichtlich ihrer Form und Größe im wesentlichen einander ähnlich sein. Auf der der Abführleitung 46 abgewandten Seite der Grundplatte 55 sind zwei um Schwenkachsen 56 verschwenkbare Klappen 57 vorgesehen, deren Ausmaße derart gewählt sind, daß sie in der nach unten geschwenkten Stellung auf dem oberen Rand der Ausnehmung 54 aufliegen und diese vollständig und gegenüber der Abführleitung 46 abdichtend bedecken. Um das Eigengewicht der Klappen 57 und damit das Drehmoment bezüglich der Schwenkachse 56 zu erhöhen, können an der Klappenunterseite 58 zusätzliche Gewichte 59 befestigt sein. Diese sind in Figur 2 nur an den nach unten verschwenkten Klappen 57' gezeigt. Um den Schwenkbereich der Klappen 57 nach oben zu begrenzen, ist oberhalb der Grundplatte 55 eine mit dieser über Stege 60 verbundene Anschlagplatte 61 vorgesehen, deren Anschlagkanten 62 im wesentlichen parallel zu den Schwenkachsen 56 oberhalb der Grundplatte 55 verlaufen. Die Grundplatte 55 ist über einen Verbindungssteg 63 mit einer Schieber-Stange 64 verbunden. Die Schieber-Stange 64 ist durch eine Seitenwand 65 des Kamin-Gehäuses 52 und die Außenwand 30 geführt und mittels eines pneumatisch oder hydraulisch beaufschlagbaren Kolben-Zylinder-Antriebs 66 entlang der Verschieberichtung 53 verschiebbar. Anstelle des Antriebs 66 können auch andere Betätigungseinrichtungen, wie z.B. ein manueller oder ein elektromotorischer Linear-Antrieb etc. verwendet werden.

Beim Betrieb des Backofens erfolgt zu vorgegebenen Zeitpunkten eine Beschwadung des Backguts, d.h. durch die Zuführleitungen 42 wird Wasserdampf in die Backräume 4 eingebracht. Zu diesem Zeitpunkt befindet sich das Absperr-Element 48 in der in Figur 2 dargestellten Position, wobei die Klappen 57 auf der Grundplatte 55 dichtend aufliegen. Der Wasserdampf kann somit nicht durch die Abführleitungen 46 entweichen. Für den Fall, daß beim Beschwaden ein Überdruck im Backraum 4 entsteht, verursacht dieser Überdruck eine in Fig. 2 nach oben gerichtete Schwenkbewegung der Klappen 57. Soll die Beschwadung beendet werden, so wird das Absperr-Element 48 durch den Antrieb 66 entlang der Verschieberichtung 53 in Figur 2 nach rechts verschoben, wodurch die Öffnung 50 freigelegt wird und die Schwaden durch den Entschwadungskamin 49 abziehen können. Durch die Frischluft-Zuführleitung 45 wird Frischluft den jeweiligen Backräumen 4 zugeführt. Nach Abschluß der Entschwadung wird das Absperr-Element 48 in die ursprüngliche in Figur 2 dargestellte Position zurückgeschoben. Für den Fall, daß nach dem Entschwaden ein Überdruck im Backraum 4 entsteht, verursacht dieser Überdruck, wie bereits oben beschrieben, eine in Fig. 2 nach oben gerichtete Schwenkbewegung der Klappen 57. Der Auslösedruck, d.h. der Druck, oberhalb dessen ein Verschwenken der Klappen 57 stattfindet, kann durch entsprechende Wahl der Gewichte 59 eingestellt werden. Der Überdruck in den Backräumen 4 wird somit durch die Öffnung der Klappen 57 der jeweiligen Absperr-Elemente 48 abgebaut, so daß es zu keiner Gefährdung des Backpersonals durch das andernfalls an anderen Stellen entweichende heiße Gas kommen kann. Nach erfolgtem Druckausgleich schließen sich die Klappen 57 automatisch in Folge der Schwerkraft.

## Patentansprüche

1. Backofen (1), umfassend
a) mindestens einen Herd (3) mit einem Backraum (4),
b) eine Heizeinrichtung,
c) eine zu jedem Herd (3) führende Beschwadungs-Einrichtung zum Zuführen von Schwaden und/oder Frischluft,
d) eine von jedem Herd (3) wegführende Entschwadungs-Einrichtung zum Abführen von Schwaden und/oder Abluft und
e) eine von jedem Herd (3) wegführende Überdruck-Abbau-Einrichtung zum Abbau von über einem vorgegebenen Wert liegenden Überdruck im Backraum (4) **dadurch gekennzeichnet, daß**
f) die Entschwadungs-Einrichtung und die Überdruck-Abbau-Einrichtung über eine gemeinsame Abführleitung (46) mit dem jeweiligen Herd (3) verbunden sind.

2. Backofen (1) gemäß Anspruch 1, **dadurch gekennzeichnet, daß**
a) die Entschwadungs-Einrichtung ein Absperr-Element (48) aufweist, das zwischen
i) einer ersten Endstellung, die die Abführleitung (46) versperrt, und
ii) einer zweiten Endstellung, die die Abführleitung (46) freigibt, verschiebbar ist, und
b) die Überdruck-Abbau-Einrichtung ein im Absperr-Element (48) angeordnetes Verschluß-Element aufweist, das
i) unterhalb eines von der Abführleitung (46) auf das Verschluß-Element wirkenden vorgegebenen Drucks geschlossen ist und
ii) oberhalb eines von der Abführleitung (46) auf das Verschluß-Element wirkenden vorgegebenen Drucks geöffnet ist.

3. Backofen (1) gemäß Anspruch 2, **dadurch gekennzeichnet, daß** das Absperr-Element (48) eine Grundplatte (55) aufweist, deren Ausdehnung größer ist als die abzusperrende Querschnittsfläche der Abführleitung (46).

4. Backofen (1) gemäß Anspruch 3, **dadurch gekennzeichnet, daß** die Grundplatte (55) eine Ausnehmung (54) aufweist.

5. Backofen (1) gemäß Anspruch 4, **dadurch gekennzeichnet, daß** mindestens eine Klappe (57) vorgesehen ist, die zwischen
i) einer ersten Stellung, in der die Ausnehmung (54) verschlossen ist, und
ii) einer zweiten Stellung, in der die Ausnehmung (54) geöffnet ist, verschwenkbar ist.

6. Backofen (1) gemäß Anspruch 5, **dadurch gekennzeichnet, daß** der zum Öffnen des Verschluß-Elements erforderliche vorgegebene Druck durch Anbringung von Gewichten (59) an jeder Klappe (57) veränderbar ist.

7. Backofen (1) gemäß Ansprüchen 5 oder 6, **dadurch gekennzeichnet, daß** jede Klappe (57) in der zweiten Stellung durch einen Anschlag (Anschlagplatte 61) hinsichtlich der Verschwenkbarkeit begrenzt ist.

8. Backofen (1) gemäß Ansprüchen 2 bis 7, **dadurch gekennzeichnet, daß** das Absperr-Element (48) in Zwischenstellungen zwischen der ersten und der zweiten Endstellung verstellbar ist.

9. Backofen (1) gemäß Ansprüchen 2 bis 8, **dadurch gekennzeichnet, daß** das Absperr-Element (48) hydraulisch, pneumatisch, elektromotorisch oder manuell betätigbar ist.
